# EUROPEAN PATENT APPLICATION

(11) **EP 1 816 547 A1**
(43) Date of publication of application: **08.08.2007**
(21) Application number: 06075261.5
(22) Date of filing: 06.02.2006
(51) Int. Cl.: G06F 3/023

(54) **A system, method, computer program and kit for controlling a usage of a manual input device**

(71) Applicant: Van der Laan, Harry, 3961 KZ Wijk bij Duurstede (NL)
(72) Inventor: Van der Laan, Harry, 3961 KZ Wijk bij Duurstede (NL)
(74) Representative: Winckels, Johannes Hubertus F.

(57) **Abstract**

A system for controlling a usage of a manual input device, such as a mouse or keyboard, including a monitoring unit for monitoring the usage of the manual input device; a first comparing unit for comparing the usage with a predetermined interrupt criterion; and a man-machine interface for providing, when the usage satisfies the predetermined interrupt criterion, an indication to a user of the manual input device to interrupt using the manual input device and to perform a grasp-like movement against a load. The system further includes an exercise device provided with a load, said load being arranged to provide a counter force against a grasp-like movement of the user.

## Description

### FIELD AND BACKGROUND OF THE INVENTION

The invention relates to a system for controlling the usage of a manual input device such as a keyboard or a computer mouse. The invention further relates to a method for controlling the usage of such a manual input device. The invention also relates to a computer program for controlling the usage of a manual input device, and to a kit including an exercise device.

RSI is an established abbreviation in medicine, standing for "Repetitive Strain Injury (RSI)". In general, RSI-like phenomena are also referred to as WRMD (workrelated musculo-skeletal disorders). RSI is used to describe a number of named musculo-skeletal conditions (such as tenosynovitis, cramp of the hand, tendinitis, etc.) as well as 'diffuse RSI' which is more difficult to define but which recent research attributes to damage to the nervous system. Symptoms of RSI are, e.g. numbness, tingling, sharp pain, dull ache, weakness, loss of grip and restricted movement of upper or lower limbs.

Although a scientific consensus about the causes of RSI is absent, it has been suggested that RSI can be prevented. Ergonomically designed mice and keyboards are known which are believed to have a design which prevents the user from developing RSI symptoms. Furthermore, it is believed that RSI can be prevented by a suitable use of the manual input device. For example, United States patent 5902257 suggests that by informing a user about an amount of force exerted on a keyboard during typing, a user can change his or her typing behaviour and thus prevent RSI.

In addition, it is generally believed that RSI can be prevented by a period of rest after a period of typing or using a mouse. To ensure that the period of rest actually takes place, computer programs are known, so-called'pause software'. These computer programs, when running on a programmable apparatus, monitor the usage of the keyboard or other manual input device and remind the user by audio and/or visual signals to take a rest. The running pause-software may prescribe certain activities in the period of rest and in many cases stores information about the usage of the keyboard or mouse and about the periods of rest in a memory. For instance British patent publication 2 366 410 describes such a computer program.

However, a disadvantage of these known techniques is that, despite the measures taken, there is still a relatively large chance that a user of a mouse or keyboard, develops RSI.

### SUMMARY OF THE INVENTION

It is a goal of the invention to provide a technique which can be used to prevent RSI in an alternative, active manner.

Therefore, the invention provides a system according to claim 1. The invention further provides a method according to claim 16. Also, a data carrier or computer program product according to claim 19 is provided. In addition, a kit according to claim 20 is provided. Furthermore, an electronic device according to claim 22 is provided.

It is believed that use of such a technique results in at least a reduced chance of developing RSI-like symptoms. With such a technique, RSI may be prevented since, without wishing to be bound to any theory, it is believed that a regularly repeated grasp-like movement of the hand, preferably (but not necessarily) with an outstretched arm, against a load, strengthens the muscles and tendons involved in the grasp-like movement, while simultaneously the muscles recover from the strain endured during the use of the manual input device. In addition, it is also believed that this grasp-like movement against a load contributes to an improved circulation of blood, as well as an improved discharge of accumulated residual waste products from the muscles and tendons involved. Hence, it is less likely that a user develops RSI-like symptoms and RSI may be prevented.

These and other aspects of the invention will be apparent from and elucidated with reference to the embodiments described hereinafter. Specific embodiments of the invention are set forth in the dependent claims.

### BRIEF DESCRIPTION OF THE DRAWINGS

Further details, aspects and embodiments of the invention will be described, by way of example only, referring to the embodiments in the drawings.

FIG. 1 schematically shows a first example of an embodiment of a system according to the invention.

FIG. 2 schematically shows a second example of an embodiment of a system according to the invention.

FIG. 3 schematically shows a third example of an embodiment of a system according to the invention.

FIG. 4 schematically shows a sectional side view of a grasping device according to the invention.

Fig 5 schematically shows a fourth example of an embodiment of a system according to the invention.

### DETAILED DESCRIPTION

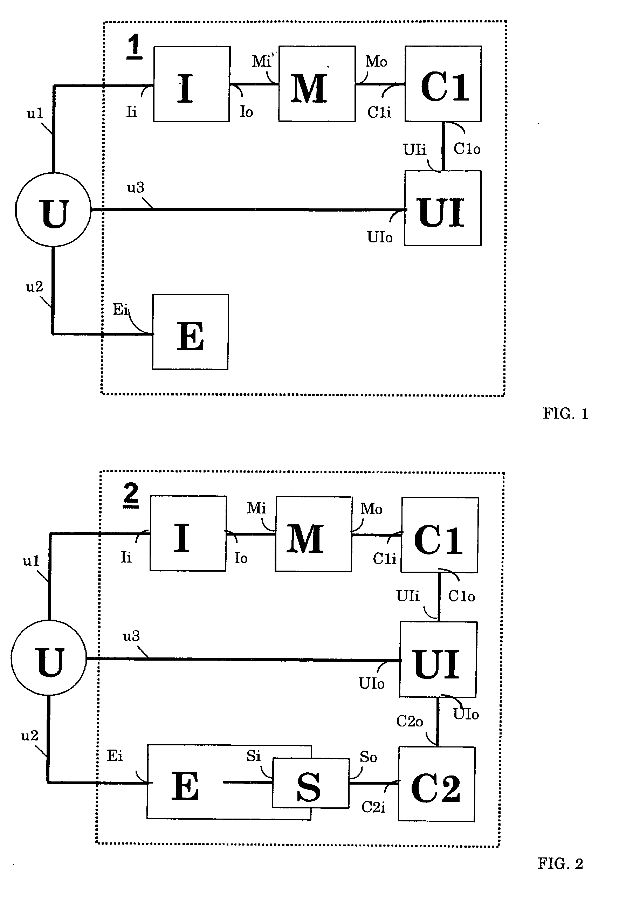

FIG. 1 schematically shows an example of an embodiment of a system 1 according to the invention for controlling a usage of a manual input device I. The system comprises a manual input device I, of which an output Io is connected to an input Mi of a monitoring unit M. An output Mo of the monitoring unit M is connected with an input C1i of a first comparing unit or comparator C1, of which an output C1o is connected to an input UIi of a man-machine interface UI. The man-machine interface UI is capable of producing signals in a form perceptible by a user U via one or more outputs UIo, as indicated by line u3 in FIG. 1.

Although in general the information between the entities making up the system will flow from the output of a device to the input of another device, it should be apparent that it is also possible for information to flow in the opposite direction. Also, for clarification purposes, only the information channels indicating the main information flows are illustrated in the figures.

The system shown in FIG. 1 further comprises an exercise device E. The input device I and the exercise device E can be manipulated by a user U by providing (physical) input via the inputs Ii and Ei, indicated in FIG. 1 by lines u1 and u2.. To that end, the input device I can for example be a mouse or a keyboard, and can be used by a user to enter information in a device or system, for example to a database.

In operation, the monitoring unit M monitors the usage of the manual input device I. The monitoring unit M may, for example, measure a duration of usage by the user U, for instance by measuring a period of time during which the keys of a keyboard are pressed. However, the monitoring unit M may alternatively or additionally measure other parameters, such as for instance the intensity of usage by the user U, e.g. by measuring the amount of keystrokes per period of time or the amount of pressure exerted on the keys.

Data representing information about, or derived from, the measured parameter(s), is produced by the monitoring unit M and outputted via the monitoring unit output Mₒ to the input Cᵢ of the first comparing unit C1. E.g. the monitoring unit M may output data representing a value of the measured period of time, and/or the intensity of usage and/or any other suitable measured parameter.

The first comparing unit C1 compares the data received at the input Cᵢ with data stored in a, not shown, comparator memory. The stored data represents a predetermined interrupt criterion. Hence the comparator Cᵢ can compare the usage of the manual input device with a predetermined interrupt criterion.

The predetermined interrupt criterion may be any suitable criterion. For instance, the comparator C1 may compare a value of the measured parameter represented by the received data with a certain threshold value represented by the stored data. The threshold value may, for example, represent a threshold for the period of time the manual input device is used, such as a half an hour. The period of time can be measured in a simple manner, e.g. by initiating a timer when the manual input device is used. Most electronic device, such as computers or other programmable apparatuses, already have a build in timer to synchronise processes and accordingly already present circuitry can be used to measure the desired parameters.

In case the usage satisfies the predetermined interrupt criterion, e.g. when the duration of the usage exceeds a predetermined maximum period, the comparator C1 outputs an interrupt signal to the man-machine interface UI via the comparator output C1o and an input UIi of the man-machine interface UI.

The man-machine interface UI can transform an input signal of a certain type into a type perceptible by the user U of the manual input device I. The man-machine interface UI may, for example, include a computer display to convert a digital signal into a visual signal or message that can be viewed by the user. However, the man-machine interface UI may transform the input signal into another type of signal perceivable by the senses of the user U, such as a vibration signal or an audio signal in the form of a tone or melody, etc. Via the man-machine interface UI, the signal outputted by the comparator C1 can be transformed into an indication to the user to interrupt using the manual input device I and to perform a grasp-like movement against a load.

By monitoring the usage of the input device I, and comparing the usage with a predetermined, suitable interrupt criterion, an indication can be provided by the man-machine interface UI to a user U to interrupt using the manual input device I when the muscular system has been taxed to a critical level. The user U may then use the exercise device E to perform a grasp-like movement against a load for stimulating the muscles and blood flow. Accordingly, the user U can be substantially prevented from developing an injury of, for example, the muscles and/or tendons caused by prolonged usage of the input device I.

For example, an individual U performing data entry on a personal computer by using a keyboard and or mouse I will tax the muscles of arm and shoulder. The information input generated by the keyboard and/or mouse I can be used to monitor the usage of the keyboard and or mouse by the user U. The period of time the keyboard and/or mouse I is used by the user U, or any other parameter suitable to indicate a taxation of the muscles and tendons, can be monitored by monitoring unit M, and be compared by the first comparing unit C1 with a predetermined threshold value, e.g. a maximum value for the period of time. A suitable threshold value for the period of time, which effectively reduces the chance of developing muscle or tendon complaints is found to be an hour or less, such as half an hour or less. It is found that a threshold value for the period of time equal to or more than ten minutes, such as more than or equal to a quarter of an hour, such as half an hour, circumvents a reduction of the productivity of the user due to a reduced level of concentration.

When the parameter monitored by the monitoring unit M exceeds the threshold, for example a time limit of half an hour, the first comparator C1 signals the man-machine interface UI, by transmitting an interrupt signal. The interrupt signal produced by the first comparator C1 is translated by the man-machine interface UI into a warning signal perceptible by the user U. This warning signal can be an audio signal, a visual signal on the computer monitor or any other suitable signal or combination of signals, indicating the user to interrupt the use of the keyboard and/or mouse I. In response to the interrupt signal, the user U may start using the exercise device E in order to exercise the muscles, by performing a grasp-like movement against a load. For example, after making a specific, predetermined number of grasping movements or after an expiration of a certain period of time the user U may stop the exercise and resume using the keyboard and/or mouse I. At the user interface UI, information about the exercise may be outputted in a for the user perceptible form, such as for example: the number of grasping movements performed, or to be performed, and/or the period of time to expire and/or the amount of the period of time already lapsed.

Without wishing to be bound to any particular theory, it is believed that prolonged taxation of the muscles, at a low force-level but with much precision, can lead to RSI-or WRMD-related injuries. By providing a monitoring system and an exercise device that strengthens the muscle- and tendon configuration of, for example, the whole arm(s) and shoulder(s), in other words, providing a fitness program for the arm (s) and shoulder(s), a system according to the invention minimizes the risk of RSI related injuries.

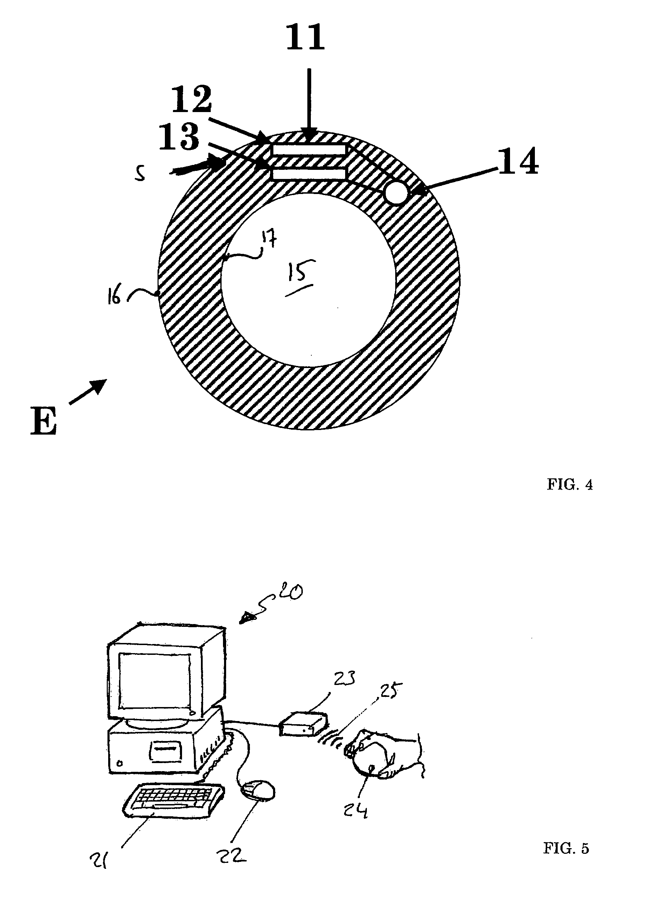

In the examples, the exercise device E is provided with a load. When the user performs a grasp-like movement on the exercise device, the load provides a counter force against the grasp-like movement of the user. An example of an implementation of a exercise device E is shown in more detail in FIG. 4. However, other implementations are also possible. FIG. 4 schematically shows a sectional side view of an exercise device E onto which a user can make a grasp-like movement against a load. The grasping device E has a ball-like shape and in this example includes a hollow ball E made of an elastic material, such as rubber. The hollow inside 15 may for example be filled with a deformable, and optionally, compressible medium, such as a gas or be filled with a non-deformable medium.

As shown in FIG. 4, the load may include an elastic deformable member, which in a non-deformed state has a curved contact surface, for being in contact with a user's hand during the grasp-like movement. A curved and deformable contact surface provides an optimal force distribution over surface of the hand and fingers, thus minimizing the risk of damaging for example the skin and/or the nerves and veins lying there beneath. For example, the exercise device may include a ball-shaped load with a pliable surface. However, other forms are also possible, for example, a spring-loaded pliers-shaped grasping device.

Although both hands can be exercised in succession with just one exercise device, it is also possible to provide two separated devices or one elaborate device for parallel training of both hands at the same time. In a further embodiment of a system according to the invention the man-machine interface can be arranged to provide the user with instructions with which hand to perform the grasp-like movement.

The grasping device E is of such dimensions that it fits the hand of the user. A grasping device in the form of a rubber ball may for example have a diameter of less than 1 decimetre, a diameter of about 5 cm is found to fit most of the hands of average adult users. However, a range of grasping devices with different sizes may be provided. In such case, a user may for example choose a grasping device from a range of grasping devices, the range comprising the sizes small, medium and large. In this way the user can choose a size that best fits his or her hand. Also, the size of the grasping device may be adjustable, in order to allow the user to adjust the size, for example of a pliers-shaped grasping device, to fit the individual's hand size. Also, special sizes could be provided for specific user groups such as children, etc.

The exercise device E may have an adjustable load. For example by tightening the spring of a spring-loaded grasping unit, or by adjusting the pressure inside the hollow rubber ball shown in FIG. 4. This adjustment can be performed by the user, to fit the exercise level to his physical capabilities, or to a level indicated by the man-machine interface, for example based on exercise parameter values stored in the memory H. However, the load may also be adjusted by the system, for example by an actuator controlled by the system and integrated with the exercise device E.

A system according to the invention, for example as shown in FIG. 1, can be used in a method for preventing repetitive strain injury. More in particular, the system can perform a method for controlling a use of a manual input device, such as a mouse or keyboard and thereby prevent RSI. Such a method may include: automatically monitoring a usage of the manual input device, comparing the usage with a predetermined interrupt criterion, and instructing a user of the manual input device to interrupt usage of the manual input device if the usage satisfies a predetermined interrupt criterion, indicating the user to perform a grasp-like movement against a load if the usage satisfies the predetermined interrupt criterion. Such a method may further include performing by the user the grasp-like movement on an exercise device provided with a load; and providing by said load a counter force against a grasp-like movement of the user. Such a method as described above may be implemented in situations wherein the user is an individual substantially without RSI like-symptoms, in order to reduce the chance that this individual develops RSI-like symptoms.

Figure 2 schematically shows a second example of an embodiment of a system 2 according to the invention. It should be noted that in the drawings the same reference numbers are used to indicate like elements. In the embodiment shown in FIG. 2 the exercise device E includes a sensor S with an input Si and an output So. The output So is connected to an input C2i of a second comparing unit C2. An output C2o of the second comparing unit C2 is connected to an input UIi of the man-machine interface UI.

The sensor S is capable of sensing a property of the grasp-like movement of the user, and transmits data representing information about the sensed property to the second comparing unit C2. The second comparing unit C2 may then compare the sensed property with a suitable exercise criterion. When the sensed property satisfies the exercise criterion, the second comparing unit C2 provides a resume signal to the man-machine interface via the output C2o and the interface input UIi. In response to receiving the resume signal, the man-machine interface UI outputs at the man-machine interface instructions to the user U to resume using the manual input device I.

The sensor S may for example be integrated within the exercise device E, for sensing a property of the grasp like movement such as the position of the fingers or the time a certain position is held by the user. Data representing information about the sensed property or derived there from, may be sent to the second comparing unit C2, and be compared with an exercise criterion, for example a threshold value n (n being an arbitrary natural number, for example 30) for the number of grasping movements to be made by the user. When the criterion is satisfied, the comparing unit C2 transmits the resume signal to the man-machine interface UI and the user U may be signalled by the man-machine interface UI in the form of a suitable signal, such as a sound signal, a visual signal on the computer display, or by any other suitable type of signal. The user U may then return to using the manual input device, e.g. the keyboard and/or mouse I.

The sensor S may for instance be constructed to sense a property of the deformation of an elastic deformable member, which property of the deformation is related to the amount of force exerted by the user during the grasp-like movement. The deformable member may for example be a rubber ball E comprising one or more sensors S.

The sensor S may be implemented in any suitable manner and, for example, include a pressure sensor which measures the pressure in an hollow inside of a deformable member filled with a pressurized fluid, e.g. air or another gas. In such case, the pressure in the inside will increase as the user exerts more force on the deformable member and accordingly, the amount of force exerted by the user can be measured. However, the sensor S may be implemented in any other manner suitable for the specific implementation.

In the example of FIG. 4, for instance, the sensor S comprises a capacitor 11, connected to an electronic circuit 14. The capacitor 11 includes a first plate 12, and the second plate 13 positioned parallel to each other and to the outer surface of the ball E. In case the user makes a grasping movement and squeezes the rubber ball E, the wall, and optionally the hollow inside, compresses elastically, and the user will perform the grasp-like movement against a load. The wall enclosing the hollow inside 15 will either be compressed in a direction normal to the outer surface 16, or be stretched in a direction parallel to the outer surface 16. In both cases, the inside 17 and the outside 16 of the wall will move towards each other, and so will the capacitor plates 12, 13. Accordingly, the position of the capacitor plates 12,13, and hence the characteristics of the capacitor 11, will change. By measuring the changing characteristics of the capacitor 11 with the electronic circuit 14, information is provided about the deformation of, and therefore the forces acting on, the ball E. This information can be used by a system according to the invention to optimize the use of the training device or rubber ball E.

The sensor S may be combined with a transmitter and a receiver. For instance, the sensor may be connected to transmitter, for transmitting data about the sensed property to a suitable receiver. For instance, the sensor and transmitter may be incorporated within the exercise device. The receiver may be connected to the second comparing unit C2 for receiving the data transmitted by the transmitter and providing the received data to the second comparing unit C2. The second comparing C2 unit may for example be part of the receiver, or part of a personal computer. In this manner, information about the grasp like movement can be transmitted wirelessly from the exercise device to the receiver and thus the rest of the system. Thereby the exercise device, and therefore the user, is not restrained by wires. However, it should be appreciated that other configurations are also possible, such as a wired connection and/or integration of the second comparing unit C2 within the exercising unit E.

As mentioned above, the sensor S may for example include a force sensor arranged to sense an amount of force exerted on the load by the user U. The second comparing unit C2 may then for instance be arranged to compare the sensed amount of force with a force threshold value, and, optionally, to compare a number of times the force threshold value is exceeded with a predetermined exercise repetition threshold value. The man-machine interface UI may then be arranged to provide instructions to the user U to resume using the manual input device I when the predetermined exercise repetition threshold value and/or force threshold value is exceeded. For example, after the second comparing C2 unit has detected that the user has made a predetermined number n of grasping movements with the exercise device E, it sends a signal to the man-machine interface UI. The interface UI then signals the user U, e.g. by means of a message on a screen, a blinking light emitting diode (LED), an audio signal or in any other suitable manner, that the exercise criterion is met. The user U can then put away the exercising device E and resume working with the manual input device I. By making clear to the user when the minimum needed exercise is performed, a system according to the invention prevents a too low amount of exercise, which would enlarge the risk of RSI.

The force threshold value can for example be personalized by a calibration procedure, for example to be performed once per working day. For instance, at initialisation of the system, the user may be instructed to perform the calibration procedure and to that end, perform a predetermined number of calibration exercises, e.g. to perform a number of times (such as less than ten times, a suitable number is found to be five times) the grasp-like movement. The force threshold value may then for example be set to the maximum amount of force averaged of the number of calibration exercises or be determined in any other suitable manner. Also, the force threshold value may be changed in time using a predetermined mathematical relationship between an initial force threshold value (e.g. set by the calibration procedure) and the amount of time the user has been using the exercise device, e.g. by increasing the required amount of force in time.

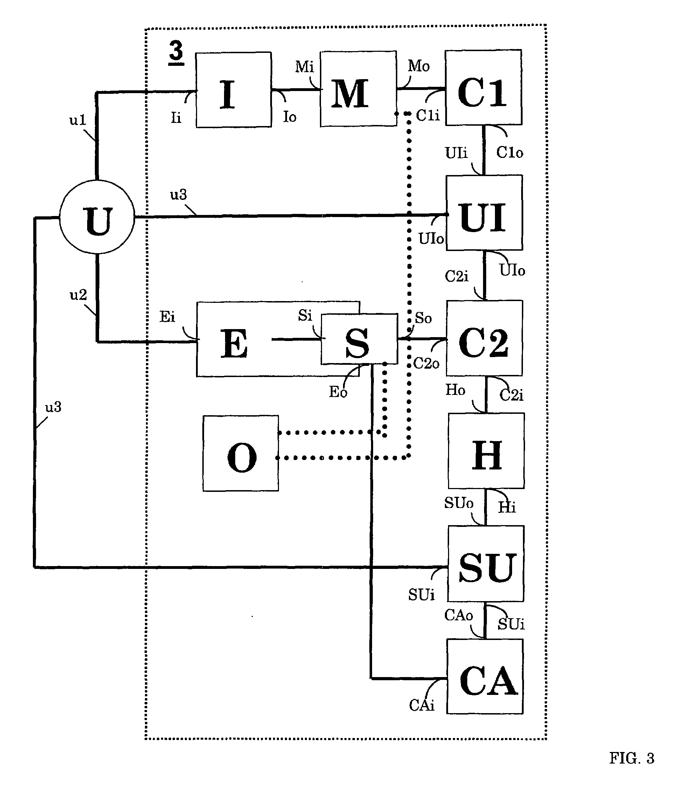

In the example shown in FIG. 3, a memory H is connected with an output Ho to an input C2i of the second comparing unit C2, and a set-up input SU is connected with a set-up input output SUo to an input Hi of the memory H. The user U can input data into the set-up input SU via a set-up input SUi, indicated with a line u4.

The memory H is capable of storing data representing exercise parameter values, such as the force threshold value and/or the repetition threshold value, etc. The set-up input SU is connected to the memory H, for receiving set-up data representing the exercise parameter values and storing the exercise parameter values in the memory H.

For example, the user U may input set-up data by choosing an exercise level or indicating gender or physical condition via the set-up input SU. The set-up input SU sends the corresponding exercise parameter values, for example the number of grasping movements to be performed, to the memory H where they are stored. These values are used as threshold values each time the user exercises.

The system 3, shown in FIG. 3, may also includes a calibration unit CA connected to set-up input SU and the sensor S. the calibration unit CA is capable of determining the force threshold value from a measurement of a grasp-force of a user U and storing data representing the determined force threshold value in the memory H.

The user may for example use the exercise device E to start a set up routine by making one quick grasping movement to start up the system, followed by two quick grasping movements for initiating the set up routine. The set up routine may for example comprise performing five times in succession a grasping movement at maximum force, holding the grasp about three seconds each time and pausing about 3 seconds in-between. The set up input SU throws out the highest and lowest of the five pressure curves and takes the average of the remaining three maximum values of which a predetermined percentage forms an exercise parameter. Because the threshold value is related to the capacities of the user, the exercise is adapted to the user's personal and current condition. It should be noted that many other set up routines are possible. Also, the set up routine can for example be initiated by the system on detecting usage of the input device I.

An output O may be connected to the sensing unit S and/or the monitoring unit M, as indicated with the dotted lines in FIG. 3. The output O can for example be used to output data representing information about the usage of the manual input device and/or the grasp-like movement performed by the user U with the exercise device E. The output O can for example be connected to a printer, or another memory, or any other suitable output device. In this way, for example, user characteristics can be archived for later analysis, a user can be provided with performance statistics, etc.

By providing user performance data via the output 0, a system according to the invention can also provide a tool for monitoring the performance of users of the system. This can for example be of great importance for an employer. Employees with RSI related injuries often are not able for an extended period of time to perform at a normal level, or even to perform at all. This may result in extensive costs on the side of the employer.

Studies show that RSI prevention by encouraging employees to exercise during work breaks are not effective because users will not perform all the exercises needed, will not perform the exercises with the right effort, or eventually even stop doing exercises at all. With a system according to the invention the physical action of the user can be monitored, and therefore a user performing less exercise than needed can be prevented. For example, the system can prevent the user U of using the input device I by disabling it until the right amount of grasping movements with the exercise device E have been made.

By providing a system according to the invention to actively control and monitor the fitness of the users, ensuring that the needed exercises are actually and rightly performed, for example employers or universities can ensure that their employees or students are, and remain in good physical health.

The invention may be implemented in a computer program for running on a computer system, at least including code portions for performing steps of a method according to the invention when run on a computer system or enabling a general purpose computer system to perform functions of a filter device according to the invention. Such a computer program may be provided on a data carrier or another tangible article of manufacture, such as a CD-rom or diskette, stored with data loadable in a memory of a computer system, the data representing the computer program. The data carrier may further include a data connection, such as a telephone cable or a wireless connection transmitting signals representing a computer program according to the invention. The program may exist in a large number of versions, using different languages, visual and audio-signals, exercise routines, frequency and threshold criteria. This program diversity may evolve in time and their version of choice may be updated by users by downloading from an internet site.

The invention may be implemented as a kit. Such a kit may for example include one or more of the elements of the examples of FIGs. 1-3 as separate components which are connectable to each other. The kit may for example include a data carrier, such as an optical disc or otherwise, provided with a suitable program code and an exercise device connectable to a computer or other programmable apparatus. By running the program on the programmable apparatus and connecting the exercise device to the programmable apparatus, a system according to the invention may, for example, be implemented. An example of an embodiment of a system comprising a ball shaped load 24, a personal computer 20 comprising a keyboard 21 and mouse 22, and a wireless transmission of information 25 between the grasping device 24 and a receiver 23 connected with the computer 20, is schematically shown in FIG. 5. The kit may also include means to access a computer program via a data communication network, such as software running on a server in a computer network. The means may for example include an access code which allows the user to access and/or use the software running on the server or to download the computer program. Also, the means may include a data carrier on which program code is stored, which when running on a programmable apparatus allows the user to access the computer program via a data communication network, e.g. which arranges a shielded connection to the server in order to download or use the software.

The invention is not limited to implementation in the disclosed examples of devices, but can likewise be applied in other devices. In particular, the invention is not limited to physical devices or units implemented in non-programmable hardware but can also be applied in programmable devices or units able to perform the desired device functions by operating in accordance with suitable program code. Furthermore, the devices may be physically distributed over a number of apparatuses, while logically regarded as a single device. For example, one employer may acquire a certain number of exercise devices and have them utilized by many employees using one single program in one network server. Also, devices logically regarded as separate devices may be integrated in a single physical device. For example, the monitoring unit and the comparing unit may be integrated in a single processor.

In the foregoing specification, the invention has been described with reference to specific examples of embodiments of the invention. It will, however, be evident that various modifications and changes may be made therein without departing from the broader spirit and scope of the invention as set forth in the appended claims. The specifications and drawings are, accordingly, to be regarded in an illustrative rather than in a restrictive sense. For example, concomitant exercises and stretchings may be optionally prescribed and the audio-visual experience may be personalized. Also, both the monitoring unit M and the comparing unit C1 can be implemented in a personal computer or computer system including at least one processor arranged to perform instructions in accordance with one or more programs, by providing the processor(s) with instructions which allows the processor(s) to perform the functions of those units. However either one or both can also form a stand-alone unit connected to a keyboard or any other appropriate manual input device.

However, other modifications, variations and alternatives are also possible. The specifications and drawings are, accordingly, to be regarded in an illustrative rather than in a restrictive sense. In the claims, any reference signs placed between parentheses shall not be construed as limiting the claim. The word 'comprising' does not exclude the presence of other elements or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. A system for controlling a usage of a manual input device, such as a mouse or keyboard, including:
a monitoring unit for monitoring the usage of the manual input device;
a first comparing unit for comparing the usage with a predetermined interrupt criterion;
a man-machine interface for providing, when the usage satisfies the predetermined interrupt criterion, an indication to a user of the manual input device to interrupt using the manual input device and to perform a grasp-like movement against a load; the system further including an exercise device provided with a load, said load being arranged to provide a counter force against a grasp-like movement of the user.

2. A system according to claim 1, wherein the exercise device includes a sensor for sensing a property of the grasp-like movement of the user, and

3. the system further includes a second comparing unit for comparing the sensed property with an exercise criterion; and
wherein the man-machine interface is arranged for outputting, when the sensed property satisfies the exercise criterion, at the man-machine interface instructions to the user to resume using the manual input device.

4. A system according to claim 2, wherein the sensor includes a force senor arranged to sense an amount of force exerted on the load by the user; and
wherein the second comparing unit is arranged for comparing the sensed amount of force with a force threshold value; and, optionally, to compare a number of times the force threshold value is exceeded with a predetermined exercise repetition threshold value; and
wherein the man-machine interface is arranged to provide instructions to the user to resume using the manual input device when the predetermined exercise repetition threshold value and/or force threshold value are/is exceeded.

5. A system according to claim 4, including:
a memory connected to the second comparing unit, for storing data representing exercise parameter values, such as the force threshold value and/or the repetition threshold value; and
a set-up input connected to the memory, for receiving set-up data representing the exercise parameter values and storing the exercise parameter values in the memory.

6. A system according to claim 4 or 5, including a calibration unit connected to set-up input and the sensor, for determining the force threshold value from a measurement of a grasp-force of a user and storing data representing the determined force threshold value in the memory.

7. A system according to any one of claims 2-6, further including an output connected to the sensor and/or the monitoring, for outputting data representing information about the usage and/or the grasp-like movement.

8. A system according to any one the preceding claims, wherein the load includes:
an elastic deformable member, which in a non-deformed state has a curved contact surface, for being in contact with a user's hand during the grasp-like movement.

9. A system according to claim 8, wherein the sensor is constructed to sense a property of the deformation of the elastic deformable member, which property of the deformation is related to the amount of force exerted by the user during the grasp-like movement.

10. A system according to claim 8 or 9, wherein the exercise device includes a ball-shaped load with a pliable surface.

11. A system according to any one of the preceding claims, wherein the load is adjustable.

12. A system according to any one of the preceding claims, wherein the man-machine interface is arranged to provide the user with instructions which hand to perform the grasp-like movement with.

13. A system according to any one of the preceding claims, wherein the monitoring unit is arranged to monitor a period of time the manual input device is used, and
wherein the first comparing unit is arranged to compare the period of time with a time threshold value.

14. A system according to claim 13, wherein the predetermined interrupt criterion is satisfied when the monitoring unit has monitored that the manual input device has been used for approximately half an hour.

15. Use of a system according to any one of the preceding claims for preventing repetitive strain injury.

16. A method for controlling a use of a manual input device, such as a mouse or keyboard, including:
automatically monitoring a usage of the manual input device;
comparing the usage with a predetermined interrupt criterion; and
instructing a user of the manual input device to interrupt usage of the manual input device when the usage satisfies a predetermined interrupt criterion;
indicating the user to perform a grasp-like movement against a load when the usage satisfies the predetermined interrupt criterion.

17. A method according to claim 16, further including:
performing by the user the grasp-like movement on an exercise device provided with a load; and
providing by said load a counter force against a grasp-like movement of the user.

18. A method according to claim 16 or 17, wherein the user is an individual substantially without RSI like-symptoms.

19. A data carrier or a computer program product, including program code portions for performing a method according to any one of claims 16- 18, when run on a programmable apparatus.

20. A kit including an exercise device and, optionally, a data carrier, or a computer program product, according to claim 19, or means to access such a computer program product via a data communication network such as the Internet.

21. A kit according to claim 20, further including a sensor for sensing a property of the grasp-like movement of the user, which sensor is connectable to a programmable apparatus on which the program can run.

22. An electronic device, such as a computer or other programmable apparatus, including:
at least one processor arranged to perform instructions in accordance with one or more programs;
a manual input device, such as a keyboard or mouse, for inputting data by a user to the processor;
a man-machine interface for outputting data by the processor in a for humans perceptible form; and
an exercise device provided with a load, said load being arranged to provide a counter force against a grasp-like movement of the user, said exercise device being communicatively connected to the processor;
wherein at least one processor is arranged to:
monitor the usage of the manual input device;
compare the usage with a predetermined interrupt criterion;
output at the user-interface data to the user, which data indicate the user to perform a grasp-like movement against a load when the usage satisfies the predetermined interrupt criterion, and
to receive data from the exercise device representing information about the performed grasp-like movement.
